# EUROPÄISCHE PATENTSCHRIFT

(11) **EP 4 201 167 B1**
(45) Veröffentlichungstag und Bekanntmachung des Hinweises auf die Patenterteilung: **12.03.2025**
(21) Anmeldenummer: 22213414.0
(22) Anmeldetag: 14.12.2022
(51) Int. Cl.: A01B 29/04, A01B 49/06, B60T 11/04, B60B 27/00, B60B 35/04, B60B 35/14

(54) **FAHRWERK MIT BREMSEINRICHTUNG**
CHASSIS WITH BRAKING DEVICE
CHASSIS AVEC DISPOSITIF DE FREINAGE

(30) Priorität: 16.12.2021 DE 102021133440
(43) Veröffentlichungstag der Anmeldung: 28.06.2023
(73) Patentinhaber: LEMKEN GmbH & Co. KG, 46519 Alpen (DE)
(72) Erfinder: Diepers, Clemens, 47647 Kerken-Aldekerk (DE)

(56) Entgegenhaltungen:
- EP-B1- 2 457 426
- DE-A1- 10 307 396
- DE-A1- 102014 106 953
- US-A- 4 519 460

## Beschreibung

Die Erfindung betrifft eine paarweise Anordnung von Bremsachstummeln gemäß dem Oberbegriff des Patentanspruches 1.

Landwirtschaftliche Maschinen, beispielsweise zur Bodenbearbeitung und/oder Aussaat sind aus EP2055164B1 bekannt. Die dort beschriebene Gerätekombination vereint Werkzeuge zur Bodenbearbeitung sowie eine nachfolgende Einrichtung zur Ausbringung von Dünger und/oder Saatgut. Um den dort von den Bodenbearbeitungswerkzeugen gelockerten Boden vor Ausbringung des Saatgutes zu verfestigen, besitzt die Gerätekombination eine Fahrwerkspackerwalze, welche sowohl den Großteil des Gewichtes der Maschine als auch den des in einem Vorratsbehälter mitgeführten Düngers und/oder Saatgutes auf dem Boden abstützt. Zugleich sind eine Vielzahl von Rädern des Fahrwerkes auf der ganzen Arbeitsbreite der Gerätekombination nebeneinander angeordnet, um den durch die Bodenbearbeitungswerkzeuge gelockerten Boden anzudrücken und zurückzuverfestigen. Damit wird für die nachfolgende Aussaat ein verbesserter Feldaufgang erreicht und zugleich das gesamte Gewicht gleichmäßig auf die Arbeitsbreite der Gerätekombination verteilt und somit der Bodendruck im Vergleich zu einer konventionellen Achsanordnung mit nur zwei Rädern verringert. Da derartige Gerätekombinationen hohe Gewichte aufweisen, werden diese meist mit Bremsachsen ausgestattet, um am ordnungsgemäßen Straßenverkehr teilzunehmen. Wie beispielsweise in EP1510119A1 oder DE102016117952A1 dargestellt, werden dabei zwei Räder auf einer gemeinsamen, durchgehenden Bremsachse angeordnet. Durch die paarweise Anordnung der Räder auf einer Achse werden zwischen den Reifenflanken Bodenmaterial, Pflanzenreste oder Erde eingeklemmt, welche das Fahrwerk verstopfen, vorzeitigen Reifenverschleiß verursachen und die Wirkung der Bremseinrichtung negativ beeinträchtigen. Aus EP2363013B1 ist eine Radanordnung bekannt, bei der jeweils benachbarte Räder nebst einzelner Achsstummel in Fahrtrichtung einen Achsversatz aufweisen. Dies hat den Vorteil, dass die Reifenflanken eine Relativbewegung zueinander vollziehen und zwischen den Reifenflanken eingeklemmtes Bodenmaterial und Pflanzenreste unmittelbar hinter dem Fahrwerk abwerfen. Aufgrund des Rad- oder Achsversatzes können nur einzelne Bremsachsstummel mit einer separaten Einrichtung zur Bremsbetätigung verbaut werden, welche erhöhte Teilekosten und zugleich einen hohen Bauraumbedarf verursachen, welcher die Auswahl von Reifen- und Felgengrößen stark einschränkt. Aus der DE 10 2014 106953 A1 ist ein Fahrwerk gemäß dem Oberbegriff des Anspruchs 1 bekannt.

Aufgabe der Erfindung ist es, eine Anordnung von Bremsachsstummeln zu schaffen, welche obige Nachteile vermeidet.

Diese Aufgabe wird durch die Merkmale des kennzeichnenden Teiles des Anspruches 1 gelöst. Weitere Vorteile sind den nachfolgenden Ansprüchen zu entnehmen.

Ein Fahrwerk eines vorzugsweise landwirtschaftlich genutzten Fahrzeuges oder fahrbaren Gerätes mit einer Anordnung von Bremsachsstummeln und Rädern wird in einer Fahrtrichtung über eine Bodenoberfläche bewegt oder transportiert. Dabei weisen die Bremsachsstummel eine Stummelachse mit einer Bremseinrichtung auf, an welcher jeweils eine Radnabe drehbar gelagert ist und mit der Bremseinrichtung in Wirkverbindung steht, wobei an jeder Radnabe zumindest ein Rad befestigt ist. Dabei ist am Bremsachsstummel jeweils eine Bremsbetätigungswelle zur Einleitung eines aufgebrachten Bremsbetätigungsmomentes in die Bremseinrichtung der Bremsachsstummel angeordnet. Das Bremsbetätigungsmoment kann durch einen Aktor direkt oder mittelbar über Hebel oder Getriebe aufgebracht werden. Indem zumindest ein Paar von Bremsachsstummeln in Fahrtrichtung des Fahrzeuges versetzt zueinander angeordnet sind, wird ein Reinigungseffekt der Räder erreicht, weil durch die Relativbewegung zwischen den Rädern mitgenommenes und eingeklemmtes Bodenmaterial durch die Relativbewegung der Räder zueinander gelockert und abgeworfen wird. Hierzu weisen die Achsmitten der Stummelachsen einen Abstand zueinander auf. Der Abstand wird horizontal in Fahrtrichtung des Fahrzeuges gemessen. Die Bremsbetätigungswellen sind etwa koaxial zueinander angeordnet und fluchten damit zueinander. Durch die fluchtende Ausrichtung der Bremsbetätigungswellen der beiden Bremsachsstummel können die Bremsmomente mit einer Vorrichtung aufgebracht werden, wie sie bislang nur von durchgehenden Bremsachsen bekannt war. Dabei wird im Vergleich zu einer konventionellen, durchgehenden Achse der Reinigungseffekt der Räder zueinander und somit die Funktionssicherheit der gesamten Bremsanlage verbessert. Insbesondere, wenn den Bremsbetätigungswellen zumindest ein, vorzugsweise zwei Bremshebel zugeordnet sind, kann an deren von den Bremsbetätigungswellen abstehenden Hebelenden eine Bremskraft aufgebracht werden. Die Bremskraft wird über die Bremshebel als Bremsmoment mittels der Bremsbetätigungswellen in die Bremsachsstummel übertragen und leitet die Abbremsung ein. Insbesondere sind die Bremsachsstummel mit Trommelbremsen ausgebildet oder ausgestattet, wobei Bremsbetätigungswellen einen oder mehrere Nocken exzentrische Nocken bewegen, welche ihrerseits eine oder mehrere Bremsbacken gegen die Innenfläche einer Bremstrommel pressen und die Bremswirkung durch Reibung einleiten. Ebenfalls können die Bremswellen derart angeordnet sein, dass eine Spreiz- oder Klemmwirkung auf eine Bremsscheibe anstelle einer Trommelbremse erreicht wird.

In einer bevorzugten Anordnung sind zwei Bremshebel nebeneinander zwischen den paarweise angeordneten Bremsachsstummeln auf den jeweiligen Bremsbetätigungswellen angeordnet. Zwischen den Hebelenden der Bremshebel ist ein Waagebalken angeordnet. Dieser ist dazu geeignet Fluchtungsfehler der Hebelenden, wie sie bei abweichenden Einstellungen oder Bremsenverschleiß auftreten können, auszugleichen.

In einer weiteren Ausführungsform ist dem einen oder den beiden Bremshebeln zumindest ein Betätigungselement zugeordnet, welches die Bremskraft auf die Hebel aufbringt. Dabei kann das Betätigungselement unmittelbar als Druck- oder Zugzylinder ausgebildet sein, ebenso aber als Druckstab oder Zugmittel, um Druck und/oder Zugkraft zur Betätigung der Bremse mittelbar aufzubringen. Über einen pneumatisch oder hydraulisch betätigten Zylinder hinaus kann die Bremskraft auch über eine Auflaufbremseinrichtung oder eine manuelle Feststellbremseinrichtung aufgebracht werden. Insbesondere ist auch eine kombinierte Zug- / Druckkraftübertragung umfasst, wie sie bei einer Kombination einer Betriebsbremsanlage zusammen mit einer weiteren Feststellbremsanlage vorzufinden ist. Als Betätigungselement sind Zugmittel wie Seile, Ketten und Zugstreben, ebenso aber Druckstreben, Betätigungsgestänge mit Vorgelege- und Übersetzungsgetrieben zur Erhöhung der aufzubringenden Bremskräfte oder Stellwege umfasst.

In einer komfortablen Ausführungsform weist zumindest ein Bremshebel eine Stelleinrichtung zur Änderung seiner Winkellage relativ zur Bremsbetätigungswelle auf. Hierzu kann ein Bremshebel mit einer manuell oder verschleißabhängig betätigbaren Nachstelleinrichtung ausgestattet sein. Durch die Einstellbarkeit können Unterschiede der Bremswirkung initial bei Inbetriebnahme als auch bei auftretendem Verschleiß der Bremsanlage einfach korrigiert werden. Vorzugsweise ist eine Nachstelleinrichtung als Schneckengetriebe oder einstellbare Hirth-Verzahnung ausgebildet, welche zwischen Bremshebelende und Bremsbetätigungswelle angeordnet ist.

Vorzugsweise weist das Fahrwerk einen Fahrwerksrahmen mit zumindest einem Querträger auf, von welchem je versetztem Radpaar ein Mittelsteg absteht oder sich in den Bremsachsbereich erstreckt. Dieser ist zwischen jeweils paarweise zueinander stehenden Bremsachsstummeln angeordnet. Die Bremsachsstummel können mit dem Mittelsteg verschweißt, verklemmt oder mit weiteren Formschlusselementen fixiert werden. Vorzugsweise weist ein Mittelsteg eine lösbare Verbindung zum Fahrwerksrahmen und/oder den Bremsachsstummeln auf, um insbesondere bei beengten Platzverhältnissen eine Montage / Demontage der Bremsachsstummel oder der Räder zu vereinfachen.

Eine montagefreundliche Anordnung der Stummelachsen der Bremsachsstummel am Mittelsteg wird erreicht, indem die Stummelachsen an ihrem der Radnabe gegenüberliegendem Ende einen Flansch aufweisen, welcher die Bremsachsstummel mit dem Mittelsteg fixiert. Zur Fixierung dienen ein oder mehrere Befestigungsmittel. Diese können auch durch weitere Formschlusselemente in der Fixierwirkung unterstützt werden.

Insbesondere, wenn die jeweiligen Bremsachsstummel mit ihrem Flansch zumindest ein, vorzugsweise mehrere Befestigungsmittel aufweisen, wobei zumindest ein Befestigungsmittel gemeinsam mit dem Flansch des ersten Bremsachsstummels und auf der anderen Seite des Mittelsteges angeordneten Flansch des zweiten Bremsachsstummels in Verbindung steht, wird eine platzsparende, bauraumoptimierte Flanschverbindung erreicht. Dabei weisen sowohl der Mittelsteg als auch die Flansche der Bremsachsstummel Ausnehmungen oder Bohrungen auf, durch welche eine Klemmverbindung, beispielsweise durch Schrauben und Muttern, Gewindebohrungen oder Gewindebolzen wirkt. Da sich die in Fahrtrichtung zueinander versetzten Flansche seitlich gesehen überlappen können, ist es vorteilhaft, wenn zumindest ein, vorzugsweise zwei Befestigungsmittel gemeinsam dort auf beide Flansche wirken, wo sich diese überlappen bzw. deren Ausnehmungen zueinander fluchten. Vorteilhafterweise weist ein jeweiliger Flansch vier Ausnehmungen und der dazwischen stehende Mittelsteg sechs Ausnehmungen zur Aufnahme von Befestigungsmitteln auf. Dabei weisen die jeweils äußeren Ausnehmungen des Mittelstegs zu den dazwischen liegenden Ausnehmungen die gleichen Abstände zueinander auf wie die korrespondierenden Ausnehmungen der Flansche, zumindest in Fahrtrichtung gemessen.

Die Erfindung zeichnet sich insbesondere dadurch aus, dass durch eine Kombination eines Achsversatzes der Radachsen mit einer fluchtenden Anordnung der Bremswellen einerseits eine einfache, kostengünstige Bremsanlage realisiert wird, welche andererseits eine geringe Verschmutzungsanfälligkeit und somit erhöhte Betriebssicherheit aufweist.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein landwirtschaftliches Fahrzeug 1 in perspektivischer Darstellung in Ansicht schräg von vorne,
Fig.2 einen Teil des Rahmens 2 des Fahrzeuges 1 in perspektivischer Darstellung in Ansicht schräg von hinten
Fig.3 die gleiche Ansicht wie Figur 2 jedoch der übersichtshalber nur mit jedem zweiten Rad dargestellt,
Fig. 4 eine einzelne Bremsachsanordnung aus Figur 3 und
Fig. 5 eine paarweise Anordnung von Bremsachsstummeln in perspektivischer Darstellung schräg von vorne.

### Figurenbeschreibung

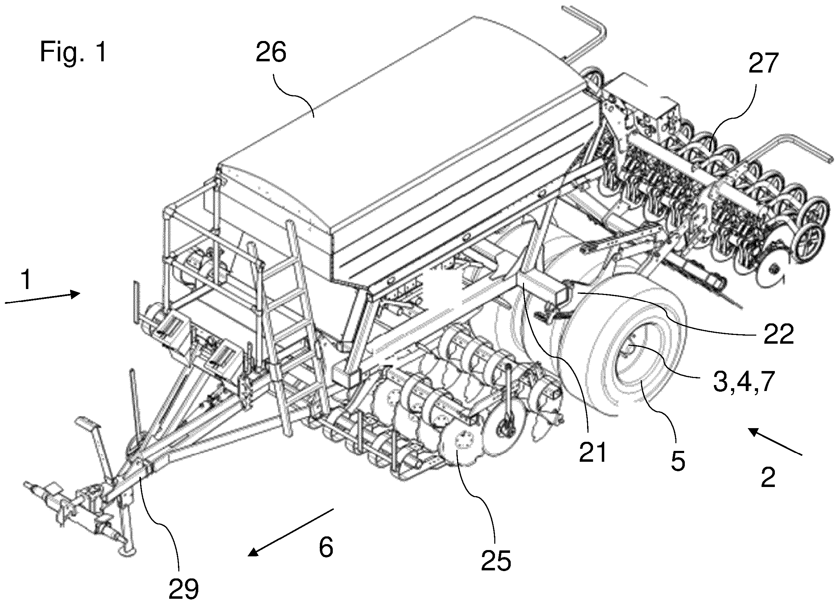

Figur 1 zeigt ein als landwirtschaftliche Säkombination ausgebildetes Fahrzeug 1. Das Fahrzeug 1 weist im vorderen Bereich eine Zugdeichsel 29 auf, welche zur Kopplung und Fortbewegung des Fahrzeuges 1 mit einem nicht dargestellten Zugfahrzeug dient. Die Fortbewegung erfolgt in Fahrtrichtung 6. Das Zugfahrzeug weist eine hydraulische oder pneumatische Druckversorgung auf, welche mit der Bremsanlage des Fahrzeuges 1 verbunden ist. Das Fahrzeug 1 weist im mittleren bis hinteren Bereich ein Fahrwerk 2 für den Betrieb und zum Transport auf, welches einen größeren Teil des Gewichtes des Fahrzeuges 1 trägt und auf den Boden abstützt. Im vorderen Bereich des Fahrwerkes 2 ist eine Sektion mit mehreren, über die Arbeitsbreite des Fahrzeuges verteilten Bodenbearbeitungswerkzeugen 25, vorzugsweise aushebbar angeordnet. Durch die Räder 5 des Fahrwerkes 2, welche in Fahrtrichtung 6 versetzt zueinander über die gesamte Breite des Fahrzeuges 1 angeordnet sind, kann eine Rückverfestigung des zuvor durch die Werkzeuge 25 gelockerten Bodens erfolgen. Hinter dem Fahrwerk 2 ist eine weitere Ausbringeinrichtung 27 angeordnet, mit welchem Material wie Saatgut oder Dünger auf den befahrenen Boden ausgebracht oder in diesen eingearbeitet werden kann. Vorzugsweise wird das Material in einem Behälter 26 mitgeführt und durch die Ausbringeinrichtungen 27 auf einer landwirtschaftlichen Fläche ausgebracht. Insbesondere bei Ausbringung von Saatgut ist eine nahezu ganzflächige Rückverfestigung des gelockerten Bodens durch die Räder 5 von Vorteil, um bessere Auflaufbedingungen für das nachfolgend von der Ausbringeinrichtung 27 in den Boden eingebrachte Saatgut zu schaffen. Die Fahrwerkskomponenten sind mittels eines Fahrwerksrahmen 21, welcher sich insbesondere im hinteren Bereich des Fahrwerkes 2 quer zur Fahrtrichtung 6 erstreckt, angeordnet. Das Fahrwerk besteht aus sechs nebeneinander angeordneten Rädern 5, von welchen drei sichtbar und drei weitere vom Behälter 26 verdeckt sind. Jedes zweite Rad ist jeweils zu einem benachbarten Rad in Fahrtrichtung 6 versetzt angeordnet, in dem die Stummelachsen 7 der zugehörigen Bremsachsstummel 3 und 4 zueinander beabstandet sind. Jeweils zwei Bremsachsstummel 3 und 4 stehen dabei links und rechts von einem Mittelsteg 22 ab, welcher sich nach vorne erstreckt und mit dem Fahrwerksrahmen 21 verbunden ist.

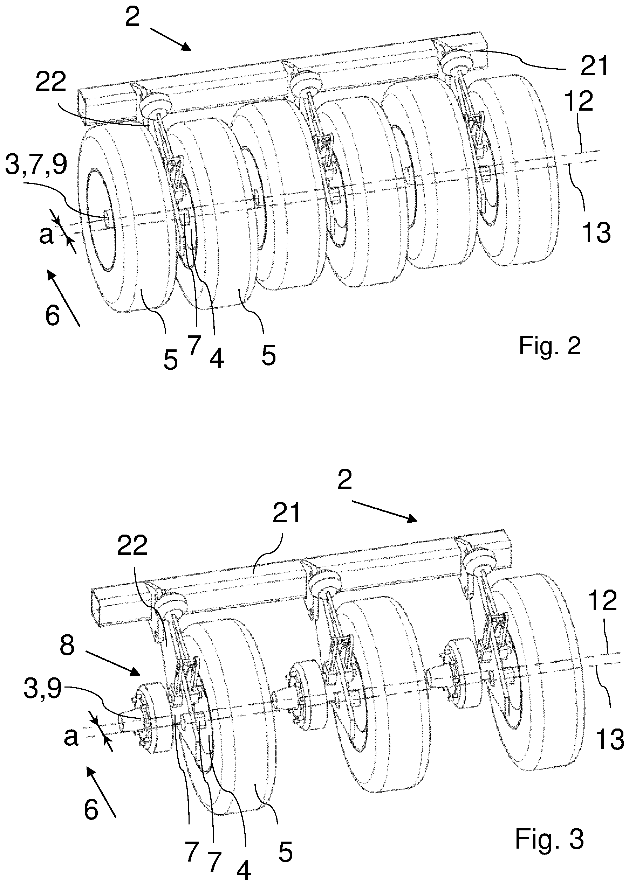

Figur 2 zeigt den relevanten Teil des Fahrwerkes 2 mit dem quer zur Fahrtrichtung 6 angeordneten Querträger des Fahrwerksrahmens 21, von welchem sich drei Mittelstege 22 nach hinten und unten in den Achsbereich erstrecken. Rechts und links eines jeweiligen Mittelsteges 22 ist ein erster, vorderer Bremsachsstummel 3 und ein weiterer, hinterer Bremsachsstummel 4 jeweils um den Abstand a in Fahrtrichtung 6 zueinander versetzt angebaut. Die Stummelachsen 7 der jeweils vorderen Bremsachsstummel 3 liegen auf einer gemeinsamen Achsmitte 12, die weiteren Stummelachsen 7 der hinteren Bremsachsstummel 4 auf der Achsmitte 13. Auf jedem vom Mittelsteg 22 abstehenden Ende einer Stummelachse 7 ist eine Radnabe 9 drehbar gelagert, an welcher ein Rad 5 bestehend aus Reifen und Felge angeflanscht ist.

Analog zu Figur 2 zeigt Figur 3 die gleiche Anordnung des Fahrwerkes 2, welche jedoch der besseren Übersicht wegen nur mit dem zweiten, vierten und sechsten jeweils nach hinten versetztem Rad 5 dargestellt ist. Durch die jeweils drei anderen, weggelassenen vorderen Rädern werden die Bremseinrichtungen 8 sichtbar. Die vorderen Bremsachsstummel 3 sind in Fahrtrichtung 6 gemessen um den Abstand a zu den hinteren Bremsachsstummeln 4 versetzt, indem die jeweils zugehörigen Stummelachsen 7 auf einer gleichen vorderen Achsmitte 12 und hinteren Achsmitte 13 fluchten, welche folglich ebenfalls den Abstand a zueinander in Fahrtrichtung 6 gemessen aufweisen. Sichtbar ist auch eine Radnabe 9, an deren vom Mittelsteg 22 abweisenden Flanschfläche die Räder 5 mittels der abstehenden Radbolzen befestigt werden können. Auf der jeweils zum Mittelsteg 22 hin gewandten Seite ist eine Bremstrommel ebenfalls mit der Radnabe 9 fest und relativ zur Stummelachse 7 drehbar verbunden.

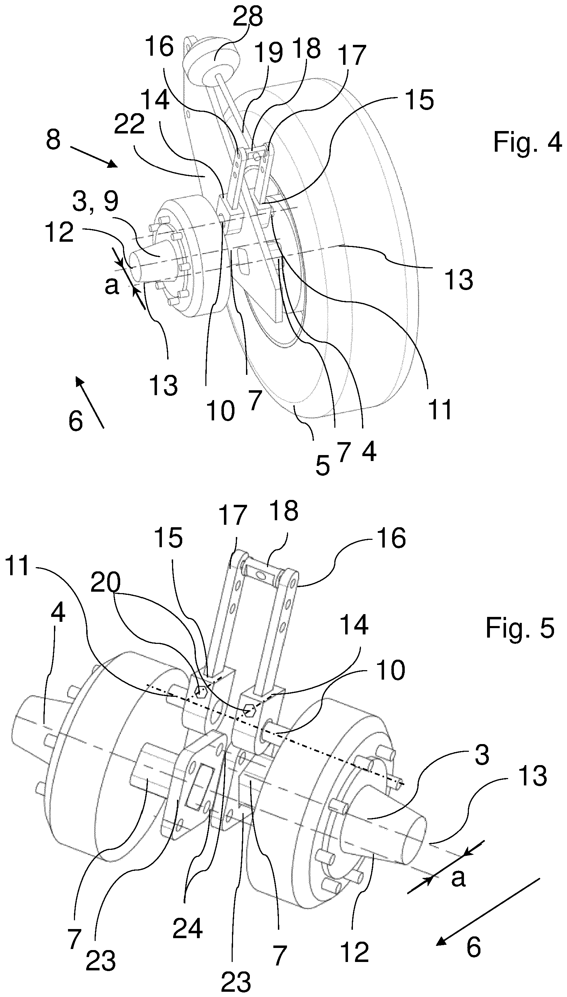

Die eigentliche Bremseinrichtung 8 wird in der folgenden Figur 4 im einzelnen dargestellt: Rechts und links vom Mittelsteg 22 ist jeweils ein vorderer Bremsachsstummel 3 und ein hinterer Bremsachsstummel 4 in Fahrtrichtung 6 zueinander versetzt angeordnet. Die Achsmitten 12 und 13 der jeweiligen Stummelachsen 7 weisen dabei den Abstand a in Fahrtrichtung gemessen zueinander auf. Vorzugsweise entspricht der Abstand a mindestens einem Querschnitt einer Stummelachse 7, dessen Erstreckung ebenfalls in Fahrtrichtung 6 gemessen wird. Von der Achsmitte 12 des Bremsachsstummels 3 steht eine Bremsbetätigungswelle 11 und von der Achsmitte 13 des Bremsachsstummels 4 eine Bremsbetätigungswelle 12 jeweils außermittig angeordnet ab. Dabei sind die jeweiligen Bremsachsstummel 3 und 4 derart zueinander um die jeweiligen Achsmitten 12 und 13 zueinander verdreht, dass die jeweiligen Bremsbetätigungswellen 11 und 12 fluchtend einander gegenüber stehen. Die beiden Bremsbetätigungswellen 11 und 12 können sich über den Mittelsteg 22 hinaus oder durch einen entsprechenden Durchbruch ineinander fortsetzen und eine gemeinsame Betätigungsnabe oder einen gemeinsamen Betätigungshebel zur Einleitung eines Betätigungsmoments in die jeweilige Bremseinrichtung 8 aufweisen. Bevorzugterweise sind die beiden Bremsbetätigungswellen 11 und 12 jedoch durch den Mittelsteg 22 unterbrochen und jeweils mit einem eigenen Bremshebel 14 und 15 versehen. Am jeweils den Bremsbetätigungswellen 11 und 12 gegenüberliegenden Ende 16 und 17 weisen die Bremshebel 14 und 15 jeweils Durchbrüche bzw. Bohrungen auf, in denen ein Waagebalken 18 drehbar angeordnet ist. Der Waagebalken 18 weist an seinen Enden entsprechend tolerierte oder ballige Zapfen auf, um ein leichtes Kippspiel, welches bei kleineren Winkeltoleranzen der Bremshebel 14 und 15 zueinander um ihre jeweilige Bremsbetätigungswellen 11 und 12 auftreten kann, zu kompensieren. Ebenfalls gelenkig oder spielbehaftet ist ein Betätigungselement, hier als Druckstange ausgebildet, mit einem Aktor 28 zur Einleitung einer Bremskraft in die jeweiligen Bremshebel verbunden. Der Aktor 28 ist vorzugsweise als Kolben- oder Membranbremszylinder ausgebildet, welcher hydraulisch, pneumatisch und / oder elektrisch zur Erzeugung einer Bremskraft beaufschlagt oder betrieben wird. Bildet man einen Teil des Betätigungselementes 19 mit einem Stellgewinde oder einem einstellbarem Gabelkopf aus, können initiale Bremseinstellungen oder Nachjustierungen bei Bremsenverschleiß einfach vorgenommen werden. Durch Auswahl der Aktorabmessungen sowie adäquate Wahl der effektiven Hebellängen der Bremshebel 14 und 15 können die erforderlichen Bremskräfte / Bremsmomente passend zu den gesetzlichen Verzögerungsanforderungen für Fahrzeuge eingestellt werden. Weiterhin kann der Aktor 28 mit einem weiteren Federspeicher kombiniert werden, um neben der Betriebsbremse für das Fahrzeug weitere Feststellbremsfunktionen zu erreichen. Ebenso kann ein weiteres Gestänge oder eine Zugeinrichtung zur Aufbringung einer weiteren Kraft für die Feststellbremsfunktion vorgesehen werden.

Analog zu Figur 4 zeigt Figur 5 eine weitere, spiegelbildliche Bremsachskonfiguration in anderer Perspektive. Auch in dieser Figur sind die beiden Bremsachsstummel 3 und 4 mit den Achsmitten 12 und 13 ihrer Stummelachsen 7 um den Abstand a in Fahrrichtung 6 zueinander versetzt angeordnet. Die beiden Bremsbetätigungswellen 10 und 11 sind auf der dargestellten Achse fluchtend zueinander angeordnet. Nach oben von den Bremsbetätigungswellen 10 und 11 abstehend stehen die beiden Bremshebel 14 und 15 ab, welche an ihren Enden 16 und 17 gemeinsam durch den Waagebalken 18 betätigt werden, wie bereits in Figur 4 beschrieben. Der in Figur 4 beschriebene Mittelsteg 22 ist hier der Übersicht wegen weggelassen. Jedoch weisen die beiden plattenförmigen Flansche einen Abstand zueinander auf, welcher der Dicke des Mittelsteges 22 aus Figur 4 entspricht. Die Flansche weisen jeweils vier Durchbrüche oder Bohrungen auf, durch welche sich Befestigungsmittel 24, vorzugsweise Schrauben oder Gewindebolzen erstrecken, welche an ihrem freien Ende mit passenden Muttern oder Gewindelöchern verspannt werden können. Daher sind die Befestigungsmittel 24 hier nur mit ihrem Mittelachen dargestellt. Vorzugsweise weisen die Durchbrüche der Flansche 23 bzw. die Mitten der Befestigungsmittel 24 den gleichen Abstand a in Fahrtrichtung zueinander auf wie die Achsmitten 12 und 13 der Stummelachsen 7 der Bremsachsstummel 3 und 4. Durch diese bevorzugte Anordnung können zwei Durchbrüche der Flansche 23 mit zwei gemeinsamen, sich über beide Flanschdicken und dem Mittelsteg 22 erstreckendem Befestigungsmittel 24 bauraumsparend verklemmt werden. In dieser Anordnung liegen zudem die beiden mittleren Achsen der Befestigungsmittel 24 in der gleichen vertikalen Ebene wie die beiden zueinander fluchtenden Mittelachsen der Bremsbetätigungswellen 10 und 11.

Die beiden Bremsbetätigungswellen 10 und 11 sind zudem, horizontal in Fahrtrichtung gemessen, genau um einen halben Abstand a zu den jeweiligen Achsmitten ihrer Bremsachsstummel 3 und 4, also mittig dazwischen, angeordnet. Um auf handelsübliche Bremsachsstummel 3, 4 zurück zu greifen, bietet es sich an, Flansche 23 mit einem rechteckigen oder quadratischen Lochbild für die Befestigungsmittel 24 zu verwenden. Die Stummelachsen sind dabei verdreht zu den Flanschen befestigt und vorzugsweise in einem Durchbruch des Flansches verschweißt. Der Verdrehwinkel entspricht dabei dem Tangens aus dem Verhältnis aus dem halben Abstand a der Achsmitten 12 und 13 und dem vertikal dazu gemessenen Abstand zu den Mitten der Bremsbetätigungswellen 10 und 11, welcher zu einer gedachten, horizontalen Ebene verläuft, welche sich durch die Achsmitten 12 und 13 erstreckt.

Die beiden Bremshebel 14 und 15 sind als so genannte Gestängesteller ausgebildet. Diese weisen von außen zugängliche Stellmittel 20 auf, mit denen über ein vorzugsweise im Gestängesteller liegendes Getriebe die Winkellage der Bremshebel relativ zu den Bremsbetätigungswellen 10 und 11 eingestellt werden kann, um eine initiale Bremseinstellung oder Nachjustierung bei auftretendem Bremsenverschleiß zu ermöglichen.

### BEZUGSZEICHENLISTE

| | |
|---|---|
| 1 | Fahrzeug |
| 2 | Fahrwerk |
| 3 | Bremsachsstummel |
| 4 | Bremsachsstummel |
| 5 | Rad |
| 6 | Fahrtrichtung |
| 7 | Stummelachse |
| 8 | Bremseinrichtung |
| 9 | Radnabe |
| 10 | Bremsbetätigungswelle |
| 11 | Bremsbetätigungswelle |
| 12 | Achsmitte |
| 13 | Achsmitte |
| 14 | Bremshebel |
| 15 | Bremshebel |
| 16 | Hebelende |
| 17 | Hebelende |
| 18 | Waagebalken |
| 19 | Betätigungselement |
| 20 | Stelleinrichtung |
| 21 | Fahrwerksrahmen |
| 22 | Mittelsteg |
| 23 | Flansch |
| 24 | Befestigungsmittel |
| 25 | Bodenbearbeitungswerkzeug |
| 26 | Behälter |
| 27 | Ausbringeinrichtung |
| 28 | Aktor |
| 29 | Deichsel |
| | |
| | |
| | |

## Patentansprüche

1. Fahrwerk (2) eines vorzugsweise landwirtschaftlich genutzten Fahrzeuges (1) oder fahrbaren Gerätes mit einer Anordnung von Bremsachsstummeln (3, 4) und Rädern (5), wobei das Fahrzeug (1) mit den Rädern (5) in einer Fahrtrichtung (6) über eine Bodenoberfläche bewegt oder transportiert wird, wobei die Bremsachsstummel (3,4) eine Stummelachse (7) mit einer Bremseinrichtung (8) aufweisen, auf welcher jeweils eine Radnabe (9) drehbar gelagert ist und mit der Bremseinrichtung (8) in Wirkverbindung steht, wobei an jeder Radnabe (9) zumindest ein Rad (5) befestigt ist, wobei die Bremsachsstummel (3, 4) jeweils eine Bremsbetätigungswelle (10, 11) zur Einleitung eines aufgebrachten Bremsbetätigungsmomentes in die Bremseinrichtung (8) der Bremsachsstummel (3, 4) aufweisen, wobei zumindest ein Paar von Bremsachsstummeln (3, 4) in Fahrtrichtung (6) des Fahrzeuges (1) versetzt zueinander angeordnet sind, derart, dass die Mitten (12, 13) der Stummelachsen einen Abstand (a) zueinander aufweisen,
**dadurch gekennzeichnet,**
**dass** die Bremsbetätigungswellen (10, 11) der beiden Bremsachsstummel (3, 4) fluchtend zueinander angeordnet sind.

2. Fahrwerk (2) nach Anspruch 1,
**dadurch gekennzeichnet,**
**dass** den Bremsbetätigungswellen (10, 11) zumindest ein, vorzugsweise zwei Bremshebel (14, 15) zugeordnet sind, an deren von den Bremsbetätigungswellen (10, 11) abstehenden Hebelenden (16, 17) eine Einrichtung zur Einleitung einer Bremskraft angeordnet ist.

3. Fahrwerk (2) nach Anspruch 1 oder 2,
**dadurch gekennzeichnet,**
**dass** zwischen den Bremshebeln (14, 15) der paarweise angeordneten Bremsachsstummel (3, 4) zwischen den Hebelenden (16, 17) der Bremshebel (14, 15) ein einen Fluchtungsfehler der Hebelenden (16, 17) ausgleichender Waagebalken (18) angeordnet ist.

4. Fahrwerk (2) nach einem der vorstehenden Ansprüche,
**dadurch gekennzeichnet,**
**dass** den einem oder beiden Bremshebeln zumindest ein Betätigungselement (19), vorzusgweise ein Druckstab oder ein Zugmittel, zur Einleitung einer Bremskraft in die Hebelenden (16, 17) der Bremshebel (14, 15) zugeordnet ist.

5. Fahrwerk (2) nach einem der vorstehenden Ansprüche,
**dadurch gekennzeichnet,**
**dass** zumindest ein Bremshebel (14, 15) eine Stelleinrichtung zur Änderung seiner Winkellage relativ zur Bremsbetätigungswelle (10, 11) aufweist.

6. Fahrwerk (2) nach einem der vorstehenden Ansprüche,
**dadurch gekennzeichnet,**
**dass** das Fahrwerk (2) einen Fahrwerksrahmen (21) mit zumindest einem Mittelsteg (22) aufweist, welcher zwischen zwei paarweise zueinander stehenden Bremsachsstummeln (3,4) angeordnet ist.

7. Fahrwerk (2) nach einem der vorstehenden Ansprüche,
**dadurch gekennzeichnet,**
**dass** die Stummelachsen (7) der Bremsachsstummel (3,4) an ihrem der Radnabe gegenüberliegenden Ende einen Flansch (23) aufweisen, welcher die Bremsachsstummel (3,4) mit dem Mittelsteg (22) fixiert.

8. Fahrwerk (2) nach einem der vorstehenden Ansprüche,
**dadurch gekennzeichnet,**
**dass** die jeweiligen Bremsachsstummel (3,4) mit ihrem Flansch (23) zumindest ein, vorzugsweise mehrere Befestigungsmittel (24) aufweisen, wobei zumindest ein Befestigungsmittel (24) gemeinsam mit dem Flansch (23) des ersten Bremsachsstummels (3) und auf der anderen Seite des Mittelsteges (22) angeordneten Flansch (23) des zweiten Bremsachsstummels (4) in Verbindung steht.

## Claims

1. A chassis (2) of a preferentially agriculturally utilised vehicle (1) or mobile implement with an arrangement of brake axle stubs (3, 4) and wheels (5), wherein the vehicle (1) is moved or transported with the wheels (5) in a the direction of travel (6) over a ground surface, wherein the brake axle stubs (3, 4) comprise a stub axle (7) with a brake device (8), on which a wheel hub (9) each is rotatably mounted and operatively connected to the brake device (8), wherein on each wheel hub (9) at least one wheel (5) is mounted, wherein the brake axle stubs (3, 4) each have a brake actuation shaft (10, 11) for introducing an applied brake actuation torque into the brake device (8) of the brake axle stub (3, 4),
wherein at least one pair of brake axle stubs (3, 4) are arranged in the direction of travel (6) of the vehicle (1) offset relative to one another in such a manner that the centres (12, 13) of the stub axles have a distance (a) relative to one another,
**characterised in that** the brake actuation shafts (10, 11) of the two brake axle stubs (3, 4) are arranged aligned with one another.

2. The chassis (2) according to Claim 1,
**characterised**
**in that** the brake actuation shafts (10, 11) are assigned at least one, preferentially two brake levers (14, 15), at their lever ends (16, 17) of which projecting from the brake actuation shafts (10, 11) a device for introducing a braking force is arranged.

3. The chassis (2) according to Claim 1 or 2,
**characterised**
**in that** between the brake levers (14, 15) of the brake axle stubs (3, 4) arranged in pairs between the lever ends (16, 17) of the brake levers (14, 15) a balance beam (18) offsetting an alignment error of the lever ends (16, 17) is arranged.

4. The chassis (2) according to any one of the preceding claims,
**characterised**
**in that** the one or both brake levers is/are assigned at least one actuation element (19), preferentially a thrust rod or a pulling means, for introducing a braking force into the lever ends (16, 17) of the brake levers (14, 15).

5. The chassis (2) according to any one of the preceding claims,
**characterised**
**in that** at least one brake lever (14, 15) comprises an adjusting device for changing its angular position relative to the brake actuation shaft (10, 11).

6. The chassis (2) according to any one of the preceding claims,
**characterised**
**in that** the chassis (2) comprises a vehicle frame (21) with at least one centre web (22), which is arranged between two brake axle stubs (3, 4) standing pairwise relative to one another.

7. The chassis (2) according to any one of the preceding claims,
**characterised**
**in that** the stub axles (7) of the brake axle stubs (3, 4) at their end located opposite the wheel hub comprise a flange (23) which fixes the brake axle stubs (3, 4) to the centre web (22).

8. The chassis (2) according to any one of the preceding claims,
**characterised**
**in that** the respective brake axles stubs (3, 4) with their flange (23) comprise at least one preferentially multiple fasteners (24), wherein at least one fastener (24) is jointly in connection with the flange (23) of the first brake axle stub (3) and the flange (23) of the second brake axle stub (4) arranged on the other side of the centre web (22).

## Revendications

1. Châssis (2) d'un véhicule (1) ou d'un engin mobile à utilage de préférence agricole, pourvu d'un ensemble de moignons d'essieu de frein (3, 4) et de roues (5), le véhicule (1) étant déplacé ou transporté par les roues (5) dans une direction de déplacement (6) sur une surface de sol, les moignons d'essieu de frein (3, 4) comportant un axe de moignon (7) doté d'un système de freinage (8) sur lequel est logé en rotation chaque fois un moyeu de roue (9) et qui est en liaison active avec le système de freinage (8), sur chaque moyeu de roue (9) étant fixée au moins une roue (5), les moignons d'essieu de frein (3, 4) comportant chacun un arbre d'actionnement de frein (10, 11), destiné à introduire un couple d'actionnement de frein appliqué dans le système de freinage (8) des moignons d'essieu de frein (3, 4),
au moins une paire de moignons d'essieu de frein (3, 4) étant placée en décalage mutuel dans la direction de déplacement (6) du véhicule (1), de telle sorte que les centres (12, 13) des axes de moignon présentent un écart (a) mutuel,
**caractérisé en ce que** les arbres d'actionnement de frein (10, 11) des deux moignons d'essieu de frein (3, 4) sont placés en alignement mutuel.

2. Châssis (2) selon la revendication 1,
**caractérisé**
**en ce qu'**aux arbres d'actionnement de frein (10, 11) sont associés au moins un, de préférence deux leviers de frein (14, 15) sur les extrémités de levier (16, 17) saillant à partir des arbres d'actionnement de frein (10, 11) desquels est placé un système, destiné à introduire une force de freinage.

3. Châssis (2) selon la revendication 1 ou 2,
**caractérisé**
**en ce qu'**entre les leviers de frein (14, 15) des moignons d'essieu de frein (3, 4) placés par paires, entre les extrémités de levier (16, 17) des leviers de frein (14, 15) est placé un fléau (18), destiné à compenser les défauts d'alignement des extrémités de levier (16, 17).

4. Châssis (2) selon l'une quelconque des revendications précédentes,
**caractérisé**
**en ce qu'**à l'un ou aux deux leviers de frein étant associé au moins un élément d'actionnement (19), de préférence une barre de pression ou un moyen de traction, destiné à introduire une force de freinage dans les extrémités de levier (16, 17) de leviers de frein (14, 15).

5. Châssis (2) selon l'une quelconque des revendications précédentes,
**caractérisé**
**en ce qu'**au moins un levier de frein (14, 15) comportant un système de réglage, destiné à modifier sa position angulaire par rapport à l'arbre d'actionnement de frein (10, 11).

6. Châssis (2) selon l'une quelconque des revendications précédentes,
**caractérisé**
**en ce que** le châssis (2) comporte un cadre de châssis (21) pourvu d'au moins une entretoise médiane (22), laquelle est placée entre deux moignons d'essieu de frein (3, 4) situés par paires mutuelles.

7. Châssis (2) selon l'une quelconque des revendications précédentes,
**caractérisé**
**en ce que** les axes de moignons (7) des moignons d'essieu de frein (3, 4) comportant sur leur extrémité opposée au moyeu de roue une bride (23), laquelle fixe les moignons d'essieu de frein (3, 4) avec l'entretoise médiane (22).

8. Châssis (2) selon l'une quelconque des revendications précédentes,
**caractérisé**
**en ce que** les moignons d'essieu de frein (3, 4) respectifs avec leur bride (23) comportent au moins un, de préférence plusieurs moyens de fixation (24) au moins un moyen de fixation (24) étant en liaison conjointement avec la bride (23) du premier moignon d'essieu de frein (3) et avec la bride (23) placée sur l'autre côté de l'entretoise médiane (22) du deuxième moignon d'essieu de frein (4).
